# EUROPEAN PATENT SPECIFICATION

(11) **EP 3 719 419 B1**
(45) Date of publication and mention of the grant of the patent: **14.12.2022**
(21) Application number: 20165327.6
(22) Date of filing: 24.03.2020
(51) Int. Cl.: F25B 41/31

(54) **MULTI-PORT VARIABLE EXPANSION PLUNGER VALVE**
KOLBENVENTIL MIT VARIABLER EXPANSION UND MEHREREN ANSCHLÜSSEN
SOUPAPE À PISTON À EXPANSION VARIABLE MULTIPORT

(30) Priority: 02.04.2019 US 201916372998
(43) Date of publication of application: 07.10.2020
(73) Proprietor: Carrier Corporation, Palm Beach Gardens, FL 33418 (US)
(72) Inventor: MERCER, Kevin, Indianapolis, IN Indiana 46231 (US); PARK, Deokgeun, TX 77840 (US)
(74) Representative: Dehns

(56) References cited:
- EP-A2- 0 714 004
- EP-A2- 1 512 926
- US-B1- 6 182 457

## Description

The present invention relates to a valve as well as to a refrigeration system including the valve, and a method of controlling flow through a valve. In particular examples, the valve is a multi-port variable expansion plunger valve.

In a refrigeration system, refrigerant is expanded from high pressure to low pressure in a confined amount of space. An evaporator serves to boil the liquid/ two phase mixture of refrigerant and absorb heat from the air, thereby cooling the air flowing across a heat exchanger.

EP 1 512 926 A2 discloses an expansion device which cancels part of the refrigerant pressure by a pressure-cancelling structure. EP 1 512 926 A2 discloses a valve according to the preamble of claim 1.

Viewed from a first aspect, the invention provides a valve as claimed in claim 1.

Optionally, the insert is configured for axially moving by sliding or rotating within the body.

Optionally, the plurality of outlet passages are blind holes.

Optionally, the plurality of outlet passages define mutually different volumes, thereby providing mutually different flow rates through the body.

Optionally, the insert includes a plurality of inlet ports configured for fluidly connecting with the respective plurality of outlet ports to provide differential flow rates through the body.

Optionally, each of the plurality of inlet ports has a mutually different size and each of the plurality of outlet passages has a same size, whereby the plurality of inlet ports provide a respective plurality of flow rates through the valve.

Optionally, each of the plurality of inlet ports has a same size and each of the plurality of outlet passages has a mutually different size, whereby the plurality of outlet passages provide a respective plurality of flow rates through the valve.

Optionally, the biasing member is a spring.

Optionally, the valve includes an electronic or pneumatic controller for controlling the plunger.

Optionally, the body includes a mechanical connecting feature for fixing the body within a refrigerant system.

Viewed from another aspect the invention provides a refrigeration system as claimed in claim 10.

Viewed from yet another aspect the invention provides a method of controlling flow through a valve as claimed in claim 11.

The valve may include any of the features set out above in connection with the first aspect and optional additions thereto.

Optionally, the method includes determining to end flow through the valve; and disengages the plunger, whereby the insert is biased in an upstream direction within the valve; and whereby the one or more inlet ports fluidly disconnects with the one or more outlet passages to measurably decrease flow through the one or more outlet passages in the valve.

The following descriptions should not be considered limiting in any way. With reference to the accompanying drawings, like elements are numbered alike:
FIG. 1 illustrates a valve according to an embodiment of the invention;
FIG. 2 illustrates various ports in components of the valve;
FIG. 3A-3C further illustrate various ports and passages in components of the valve;
FIG. 4 illustrates flow rates achievable through the valve;
FIG. 5 further illustrates a valve according to another embodiment of the invention;
FIG. 6 illustrates a refrigeration system including the valve; and
FIG. 7 illustrates a process of controlling the valve.

A detailed description of one or more embodiments of the disclosed apparatus and method are presented herein by way of exemplification and not limitation with reference to the Figures.

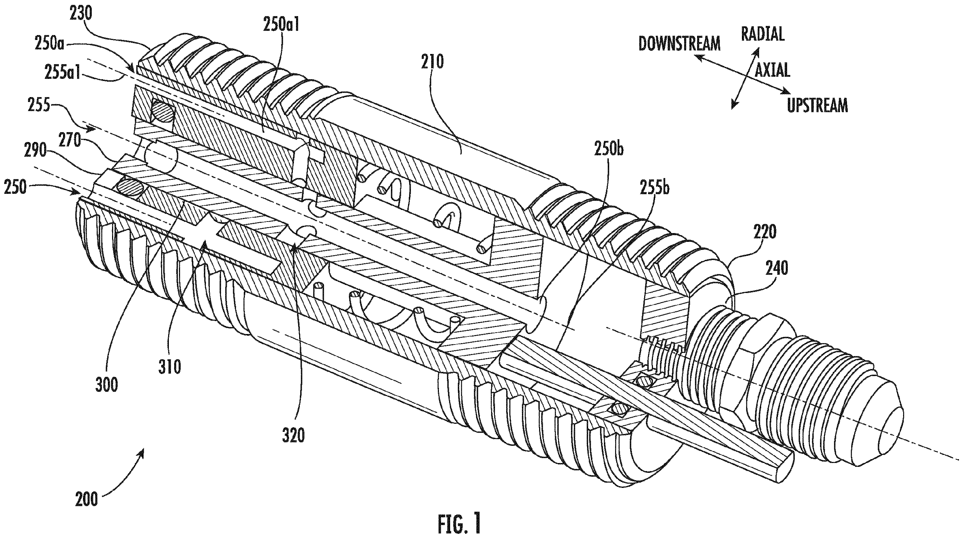

Turning to FIG. 1, disclosed is a valve 200. The valve 200 includes a body 210 that has an upstream end 220 and a downstream end 230. The body 210 includes an inlet orifice 240 and a plurality of passages 250. In practice, such orifice 240 may be a three-eighths of an inch (3/8") diameter connection for a liquid line, though such dimension is identified as one possible example and is not intended to limit the scope or applicability of the disclosed valve(s). The plurality of passages 250 includes a plurality of outlet passages 250a, including a first outlet passage 250a1, extending into the body 210 from the downstream end 230. The first outlet passage 250a1 extends upstream to a location intermediate the upstream end 220 and the downstream end 230 of the body 210.

An inlet passage 250b extends into the body 210 from the upstream end 220 of the body 210. The plurality of outlet passages 250a and the inlet passage 250b extend along mutually parallel axes 255, including for example a first axis 255a1 for the first outlet passage 250a1 and a second axis 255b for the inlet passage 250b. The plurality of axes 255 are offset radially and/or circumferentially from each other.

The inlet passage 250b is at least partially formed by an insert 270 configured for axially moving to fluidly engage with the plurality of outlet passages 250a. This configuration defines a continuous fluid passage between the upstream end 220 and the downstream end 230 of the body 210. An output flow rate through the body 210 increases or decreases depending on an axial location of the insert 270. For example, at a first axial position the inlet passage 250b can engage a first outlet passage 250a1 of the plurality of outlet passages 250a creating a first flow path from the upstream end 220 to the downstream end 230 of the body 210. The first flow path can have first pressure drop attributes corresponding to a first flow rate to pressure drop relationship for the first flow path. Furthermore, at a second axial position the inlet passage 250b can engage a second outlet passage of the plurality of outlet passages 250a creating a second flow path from the upstream end 220 to the downstream end 230 of the body 210. The second flow path can have second pressure drop attributes corresponding to a second flow rate to pressure drop relationship for the second flow path. Still further, the insert 270 can be configured to engage one or more outlet passages of the plurality of outlet passages 250a at any given axial position. For example, the insert can disengage from the first outlet passage 250a1 and engage a second outlet passage of the plurality of outlet passages 250a as the insert is axially moved. The combination of number of flow outlet passages engaged, size of the inlet ports (320a1-a4), and sizing of the plurality of the outlet passages allow for the ability to fine tune the full stroke flow and pressure drop to position relationship for the valve. The insert 270 is configured for axially moving by sliding or rotating (e.g. in a screw-like motion) within the body 210.

The plurality of outlet passages 250a are blind holes. That is, the plurality of outlet passages 250a are not through-holes so that so there is no end-to-end visual path therethough. The plurality of outlet passages 250a define mutually different volumes, which may be obtained by providing different shapes including by not limited to different diameters and/or different lengths. From this consideration the plurality of outlet passages 250a provide mutually different flow rates through the body 210 for a given pressure drop. The plurality of outlet passages 250a can be radially aligned relative to a second axis 255b for the inlet passage 250b. The plurality of outlet passages 250a can be circumferentially offset within the body. The plurality of outlet passages 250a can be circumferentially offset relative to a second axis 255b for the inlet passage 250b.

The body 210 includes an outlet annulus 290 having a central passage 300 within which the insert 270 axially moves. The plurality of outlet passages 250a are formed in the outlet annulus 290. The plurality of outlet passages 250a include a respective plurality of outlet ports generally referred to as 310 for fluidly connecting with the inlet passage 250b. The insert 270 includes a plurality of inlet ports 320 configured for fluidly connecting with the respective plurality of outlet ports 310 to provide differential flow rates through the body 210.

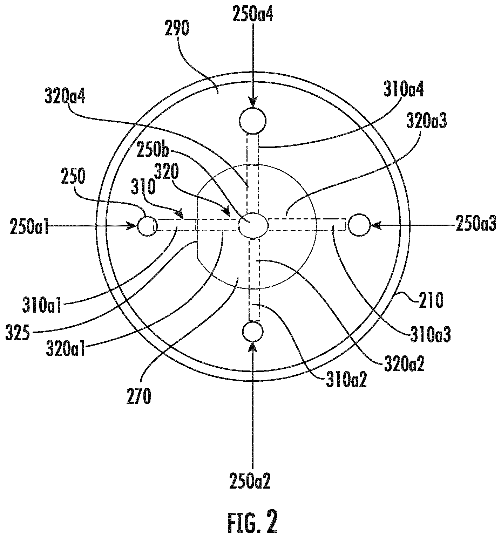

Turning to FIG. 2, the plurality of outlet passages 250a as illustrated includes four outlet passages 250a1-250a4. Accordingly the plurality of outlet ports 310 includes four outlet ports 310a1-310a4 and the plurality of inlet ports 320 includes four inlet ports 320a1-320a4. The outlet ports 310 and inlet ports 320 may be axially aligned so that at different axial locations of the insert 270, ones of the inlet ports 320 will align with ones of the outlet ports 310 to provide desired flow rates through the body 210. The flow rates are affected, for example, by having different sized outlet passages 250a. For example, each outlet passage 250a may have a plan (flow) crosssectional area that is smaller than a plan area for each sequentially subsequent outlet passage. As illustrated in FIG. 2, a first area for the first outlet passage 250a1 may be smaller than a second area for the second outlet passage 250a2, which may be smaller than a third area for the third outlet passage 250a3, which may be smaller than a fourth area for the fourth outlet passage 250a4. As illustrated in FIG. 2, the insert 270 and outlet annulus 290 may include a mating keyed surfaces 325 to prevent relative circumferential rotation therebetween.

The outlet passages 250a may be all a same size, which may be oversized, the size being a function of a respective diameter and a respective length of each of the respective outlet passages 250a. In that case, a flow rate through the valve 200, for example at each axial position, may be determined by an orifice sizing of the respective inlet ports 320, the size being a function of a respective diameter and a respective length of each of the respective inlet ports 320. The inlet ports 320 may all be a same size, which may be oversized, and the respective plurality of outlet passages 250a may be sized to provide the desired flow rate. That is, a desired pressure drop though the valve 200 may be controlled by either a sizing of the inlet ports 320 or a sizing of the outlet passages 250a.

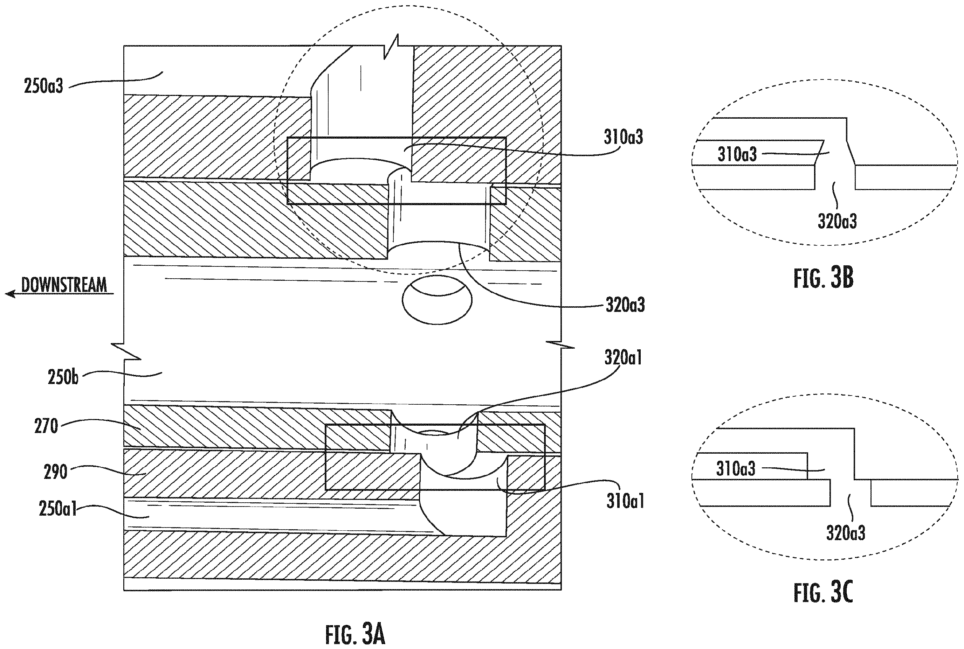

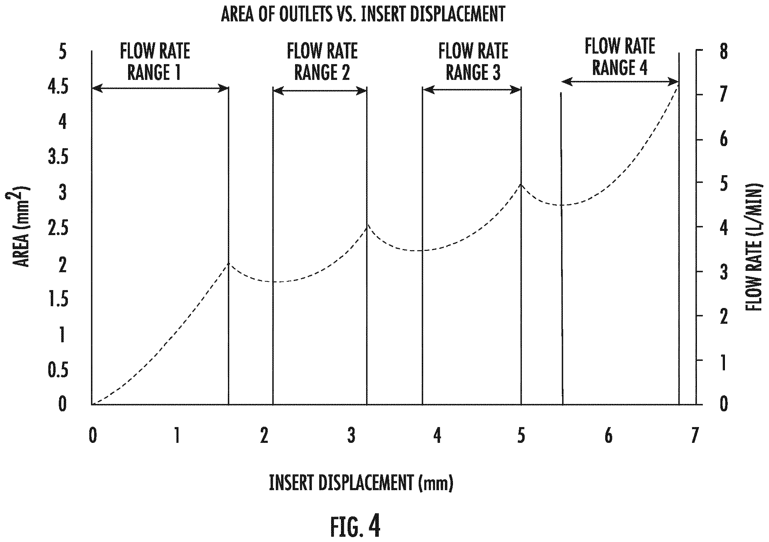

Turning to FIGS. 3A and 4, as the outlet ports 310 and inlet ports 320 may be axially configured so that moving the insert 270 in one direction, such as axially downstream, sequentially aligns inlet ports 320 with outlet ports 310 connected to the outlet passages 250a in the outlet annulus 290 that provide larger flow rates. In addition, the sequentially consecutive ports may be aligned in an overlapping configuration so that as the insert 270 moves axially, a transitional flow occurs though multiple outlet passages 250a, enabling a measured change in flow rate rather than a flow stoppage through the body. For example, as the first outlet port 310a1 and the first inlet port 320a1 fluidly disengage each other, and thus disengage the inlet passage 250b from the first outlet passage 250a1, from axial downward motion of the insert 270, the third outlet port 310a3 and the third inlet port 320a3 may fluidly engage at a matching rate. The overlapping of the ports may provide for output flow that grows smoothly with axial motion of the insert in a downstream direction. As can be appreciated, the reverse motion of the insert would result in a measured (gradual) decrease in flowrate. FIG. 4 illustrates that as the insert moves axially downwardly, the flow rate continues to grow measurably, without flow stoppage between engagement of sequentially subsequent ports. It is to be appreciated that shapes of the outlet ports 310 and inlet ports 320 may be other than a circular cylinder. For example FIG. 3B illustrates the third outlet port 310a3 with a funnel (frustoconical) shape while the shape of the third outlet port 320a3 in FIG. 3C is square (in a plan view). Other geometric shapes are possible.

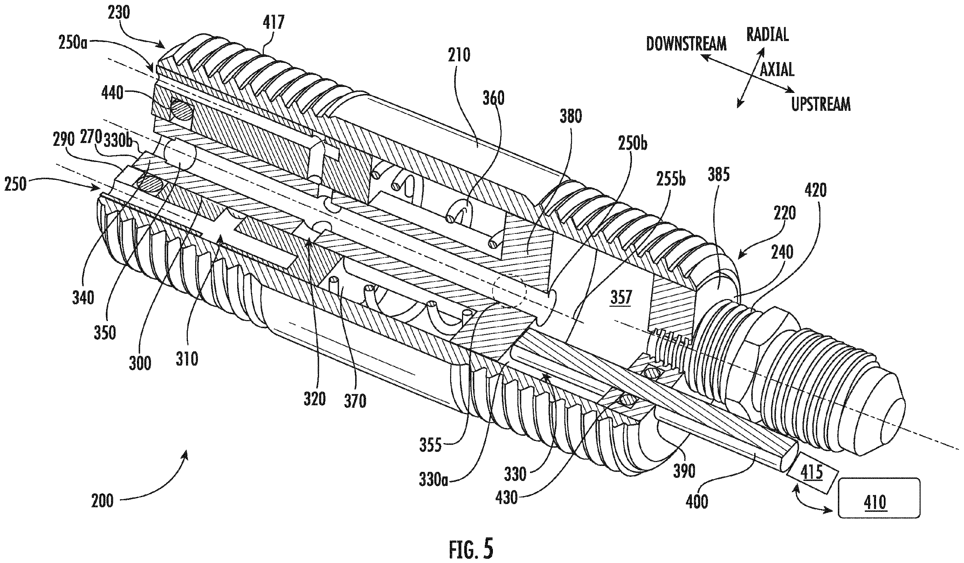

Turning to FIG. 5, the inlet passage 250b in the insert 270 is a first through hole. The central passage 300 in the outlet annulus 290 is a second through hole that is axially and radially aligned with the inlet passage 250b. From this configuration a return flow passage is formed though the body 210, through the inlet passage 250b and the inlet orifice 240.

The inlet ports 320 are located intermediate of opposing axial ends 330 of the insert 270, including an upstream axial end 330a and a downstream axial end 330b. The insert 270 includes a first insert annulus 340 that extends radially inwardly and is downstream of the inlet ports 320. A sliding (moving) element 350 is disposed in the inlet passage 250b. The sliding element 350 is larger than an inner diameter of the first inlet annulus 340. Fluid flow in the downstream direction in the inlet passage 250b urges the sliding element 350 against the annulus 340 to create a fluid seal. This forms a check valve, for the duration that fluid is directed in the downstream direction within the valve 200, to prevent flow through a downstream end 230 of the inlet passage 250b. Thus, fluid flowing in the downstream direction is caused to flow only through the inlet ports 320 and into the outlet passages 250a when exiting the valve 200.

Flow through the valve 200 is intended to be reversible, depending on flow in the refrigeration system. When flow travels upstream through the body 210, in a reverse flow direction, the flow causes the sliding element 350 to travel toward the upstream end 330a of the insert 270. The sliding element 350 may become at least partially seated in a cavity 355, illustrated schematically, which may be radially extending and may be at the upstream end of the inlet passage 250b. Seating the sliding element 350 in the cavity 355 positions the sliding element 350 at least partially out of the fluid path. This configuration allows flow upstream through the inlet passage 250b, effectively unobstructed by the sliding element 350, and out of the body 210 of the valve 200.

It is to be appreciated that the moving element 350 may have a shape of a ball, bullet, or otherwise so as to enable seating against the first insert annulus 340 as indicated. In one embodiment, the seating cavity 355 may be outside the inlet passage 250b, for example, within an open area 357 in the body 210, between the upstream end 330a of the insert 330 and an upstream annulus 385 in the body 210. The upstream annulus 385 includes the inlet orifice 240 and prevents upstream movement of the insert 270 through the upstream end 220 of the body 210. It is to be further appreciated that the open area 357 forms a fluid filed cavity during use of the valve 200, as fluid flows between the inlet orifice 240 and the inlet passage 250b, and a volume of fluid therein depends on the axial location of the insert 330.

A biasing member 360 upstream biases the insert 270. This configuration axially offsets the inlet ports 320 in an upstream direction, which will reduce flow and disengage the inlet ports 320 and the outlet ports 310. Thus, flow into the inlet passage 250b is prevented from being fluidly received in any of the plurality of outlet ports 310. The biasing member 360 is a spring. The outlet annulus 290 forms a downstream spring seat 370. The insert 270 includes a second insert annulus 380, at the upstream end 330a of the insert 270, and which extends radially outwardly to form an upstream spring seat.

The upstream annulus 385 has plunger orifice 390 through which a plunger 400 extends to engage the second insert annulus 380 to downstream bias the insert 270 for engaging the outlet ports 310 and the inlet ports 320 as disclosed. An electronic controller 410, illustrated schematically, is provided for controlling the plunger 400. For example, the controller 410 controls a solenoid 415, illustrated schematically, that advances the plunger 400.

The body 210 may include a mechanical connecting feature such as exterior threads 417 at the axial ends, similar to a threaded nipple in a mechanical piping system, for being mechanically connected to a refrigeration system. The body 210 may include a threaded pipe coupler 420, with exterior threads, threaded into the inlet orifice 240 for fluidly connecting the inlet orifice 240 in a refrigeration circuit. An upstream seal 430 may be provided in the plunger orifice 390, surrounding the plunger 400, to provide a fluid seal therebetween. A downstream seal 440 may be provided between the insert 270 and the outlet annulus 290 to provide a fluid seal therebetween.

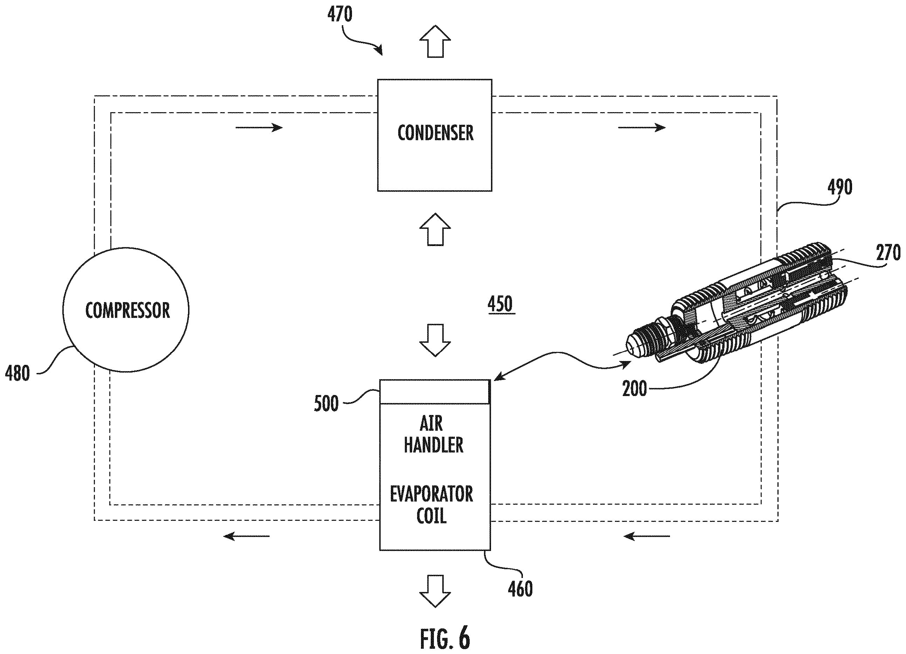

Turning to FIG. 6, within the scope of the disclosure is a refrigeration system 450. The system 450 includes including a microchannel evaporator heat exchanger 460, a condenser heat exchanger 470, a compressor 480 and various conduits generally referred to as 490. The conduits 490 enable high pressure liquid refrigerant to travel from the condenser heat exchanger 470 to the valve 200. A low pressure, two phase refrigerant travels from the valve 200 to the evaporator heat exchanger 460. The two phase refrigerant boils-off within the evaporator heat exchanger 460 and is then transferred through the conduits 490 to the compressor 480 as a single phase low pressure vapor. The valve 200 is provided, which functions as an electronic or pneumatic expansion valve in the system 450. The valve is in fluid communication with a header 500 for the heat exchanger 460 and may be threadingly received in the same. In the illustration, the insert is biased to an upstream position of the heat exchanger 460 (for example, in a cooling mode) so that no flow is travelling in the downstream direction through the valve 200.

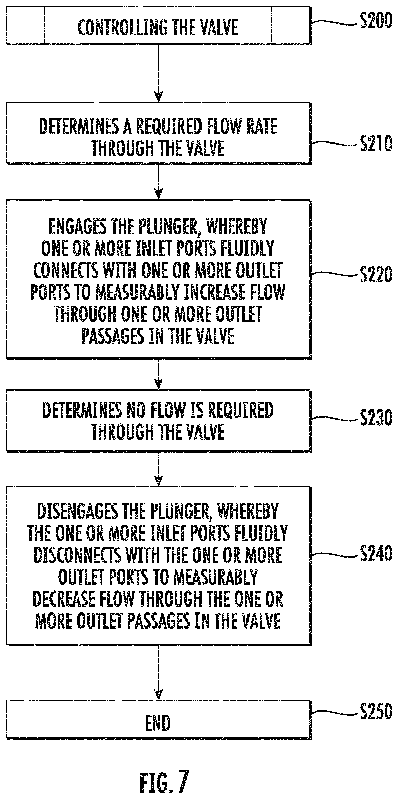

Turning to FIG. 7, a process S200 of controlling the valve 200 is disclosed. At step S210 the controller 410 determines a required flow rate through the valve 200. At step S220 the controller 410 engages the plunger 400, to thereby move the insert 270 axially. From this, one or more of the inlet ports 320 aligns with one or more of the outlet ports 310. From this, the one or more inlet ports 320 fluidly connects with the one or more outlet passages 250a to measurably increase flow through the valve 200, providing a flow at the target flow rate through the valve 200. At step S230 the controller 410 determines flow is no longer needed. At step S240 the controller 410 disengages the plunger 400, and the insert 270 is biased in the upstream direction. From this the one or more inlet ports 320 fluidly disconnects with the one or more outlet passages 250a to measurably decrease flow through the valve 200, until flow ends through the valve 200. At step S250 the process that began at step S200 ends.

Accordingly, disclosed above is a plunger valve that is cylindrical in nature and designed to fit compactly in an inlet header of a microchannel evaporator, for example in a one-inch diameter inlet orifice. The valve is configured to be removed for service. The valve includes a variable exit feature that provide for metering refrigerant output in a range of mass flowrates, for example between one and five tons of refrigerating capacity. The disclosed valve includes a check-valve feature that is applicable for heat pump applications, or reverse flow configuration. The valve may be scaled a used in residential and commercial applications.

As described above, arrangements utilizing electronic controllers can be in the form of processor-implemented processes and devices for practicing those processes, such as a processor. Such arrangements can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Such arrangements can also be in the form of computer program code, for example, whether stored in a storage medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for carrying out the relevant methods. When implemented on a general-purpose microprocessor, the computer program code segments configure the microprocessor to create specific logic circuits. Some cases also include pneumatic control where mechanical means are used to achieve the desired flow rate outputs.

The terminology used herein is for the purpose of describing particular embodiments only and is not intended to be limiting of the present invention which is defined by the appended claims. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. A valve (200) comprising:
a body (210) that has an upstream end (220) and a downstream end (230);
an inlet orifice (240);
a plurality of passages (250) including:
a first outlet passage (250a1) extending into the body (210) from the downstream end (230) to a location intermediate the upstream end (220) and the downstream end (230) of the body (210);
an inlet passage (250b) extending into the body (210) from the upstream end (220) of the body (210), the plurality of passages (250) extending along mutually parallel axes (255), wherein the mutually parallel axes (255) are offset radially and/or circumferentially from each other; and
the inlet passage (250b) being at least partially formed by an insert (270) configured for axially moving to:
fluidly engage with the first outlet passage (250a1) to define a continuous fluid passage between the upstream end (220) and the downstream end (230) of the body, wherein:
an output flow rate through the body (210) increases or decreases depending on an axial location of the insert (270);
wherein:
a plurality of outlet passages (250a), including the first outlet passage (250a1), extending into the body (210) from the downstream end (230) of the body (210) to a location intermediate the upstream end (220) and the downstream end (230) of the body (210);
the inlet passage (250b) and the plurality of outlet passage (250a) extend along mutually parallel axes (255) and are circumferentially and/or radially offset so as to be spaced within the body (210);
the body (210) includes an outlet annulus (290) having a central passage (300) within which the insert (270) moves, and the plurality of outlet passages (250a) are formed in the outlet annulus (290);
the plurality of outlet passages (250a) include a respective plurality of outlet ports (310) for fluidly connecting with the inlet passage (250b);
the inlet passage (250b) in the insert (270) is a first through hole, and the central passage (300) in the outlet annulus (290) is a second through hole that is axially and radially aligned with the first though hole, thereby forming a return flow passage though the body (210); and wherein the inlet passage hole forms a check valve, thereby preventing flow through a downstream end (330b) of the insert (270);
the inlet ports (320) are intermediate opposing axial ends (330) of the insert (270), the insert includes a first insert annulus (340) that extends radially inwardly and is downstream of the inlet ports (320), and a sliding element (350) disposed in the inlet passage (250b), the sliding element (350) being larger than an inner diameter of the first inlet annulus (340), thereby forming the check valve;
**characterized in that** the valve (200) includes a plunger (400), and a biasing member (360) that upstream biases the insert (270), the outlet annulus (290) forms a downstream spring seat (370), and the insert (270) includes a second insert annulus (380) that extends radially outwardly, thereby forming an upstream spring seat;
wherein the body (210) includes an upstream annulus (385) that includes an inlet orifice (240), the upstream annulus (385) preventing upstream movement of the insert (270) through the upstream end of the body (210); and
wherein the upstream annulus (385) includes a plunger orifice (390) through which the plunger (400) extends for engaging the second insert annulus (380) and downstream biasing the insert (270).

2. The valve (200) of claim 1, wherein the insert (270) is configured for axially moving by sliding or rotating within the body (210).

3. The valve (200) of claim 1 or claim 2, wherein the plurality of outlet passages (250a) are blind holes and/or wherein the plurality of outlet passages (250a) define mutually different volumes, thereby providing mutually different flow rates through the body (210).

4. The valve of any preceding claim, wherein the insert includes a plurality of inlet ports configured for fluidly connecting with the respective plurality of outlet ports to provide differential flow rates through the body.

5. The valve (200) of claim 4, wherein each of the plurality of inlet ports (320) has a mutually different size and each of the plurality of outlet passages (250a) has a same size, whereby the plurality of inlet ports (320) provide a respective plurality of flow rates through the valve (200).

6. The valve (200) of any preceding claim, wherein each of the plurality of inlet ports (320) has a same size and each of the plurality of outlet passages (250a) has a mutually different size, whereby the plurality of outlet passages (250a) provide a respective plurality of flow rates through the valve (200).

7. The valve of any preceding claim wherein the biasing member is a spring.

8. The valve (200) of any preceding claim, wherein the valve (200) includes an electronic or pneumatic controller (410) for controlling the plunger (400).

9. The valve (200) of any preceding claim, wherein the body (210) includes a mechanical connecting feature for fixing the body (210) within a refrigerant system (450).

10. A refrigeration system (450) including a microchannel heat exchanger (460), which includes a header (500), the header (500) including an inlet, the inlet configured to mechanically connect with the mechanical connecting feature of the valve (200) of claim 10 and/or wherein the refrigeration system (450) comprises a valve (20) as claimed in any preceding claim.

11. A method (700) of controlling flow through a valve (200) with a controller (410), the method (700) comprising:
determining (S210) a required flow rate through the valve (200); and
engaging (S220) a plunger (400), thereby axially extending an inlet passage (250b) in a downstream direction within the valve (200), whereby the inlet passage (250b) fluidly connects with one or more of a plurality of outlet passages (250a) to measurably increase flow through one or more outlet passages (250a) within the valve (200).

12. The method (700) of claim 11, the method (700) further comprising:
determining (S230) to stop the flow of a material through the valve (200); and
disengaging (S240) the plunger, whereby the inlet passage (250b) is biased in an upstream direction within the valve (200); and
whereby the inlet passage (250b) fluidly disconnects with the one or more outlet passages (250a) to measurably decrease flow through the one or more outlet passages (250a) in the valve (200).

## Patentansprüche

1. Ventil (200), umfassend:
einen Körper (210), der ein stromaufwärts liegendes Ende (220) und ein stromabwärts liegendes Ende (230) aufweist;
eine Einlassöffnung (240);
eine Vielzahl von Kanälen (250), beinhaltend:
einen ersten Auslasskanal (250a1), der sich in den Körper (210) von dem stromabwärts liegenden Ende (230) zu einer Stelle zwischen dem stromaufwärts liegenden Ende (220) und dem stromabwärts liegenden Ende (230) des Körpers (210) erstreckt;
einen Einlasskanal (250b), der sich in den Körper (210) von dem stromaufwärts liegenden Ende (220) des Körpers (210) erstreckt, wobei sich die Vielzahl von Kanälen (250) entlang wechselseitig paralleler Achsen (255) erstreckt, wobei die wechselseitig parallelen Achsen (255) radial und/oder um den Umfang voneinander versetzt sind; und
der Einlasskanal (250b) mindestens teilweise durch einen Einsatz (270) gebildet ist, der zur axialen Bewegung ausgelegt ist, um:
strömungstechnisch mit dem ersten Auslasskanal (250a1) in Verbindung zu gelangen, um einen fortlaufenden Fluidkanal zwischen dem stromaufwärts liegenden Ende (220) und dem stromabwärts liegenden Ende (230) des Körpers zu definieren, wobei:
eine Ausgangsströmungsrate durch den Körper (210) abhängig von einer axialen Stelle des Einsatzes (270) zunimmt oder abnimmt;
wobei:
eine Vielzahl von Auslasskanälen (250a), beinhaltend den ersten Auslasskanal (250a1), sich in den Körper (210) von dem stromabwärts liegenden Ende (230) des Körpers (210) zu einer Stelle zwischen dem stromaufwärts liegenden Ende (220) und dem stromabwärts liegenden Ende (230) des Körpers (210) erstreckt;
der Einlasskanal (250b) und die Vielzahl von Auslasskanälen (250a) sich entlang wechselseitig paralleler Achsen (255) erstrecken und um den Umfang und/oder radial versetzt sind, um so in dem Körper (210) beabstandet zu sein;
der Körper (210) einen Auslassringraum (290) mit einem mittleren Kanal (300), in dem sich der Einsatz (270) bewegt, beinhaltet, und die Vielzahl von Auslasskanälen (250a) in dem Auslassringraum (290) gebildet ist;
die Vielzahl von Auslasskanälen (250a) eine entsprechende Vielzahl von Auslassanschlüssen (310) für eine strömungstechnische Verbindung mit dem Einlasskanal (250b) beinhaltet;
der Einlasskanal (250b) in dem Einsatz (270) ein erstes Durchgangsloch ist und der mittlere Kanal (300) in dem Auslassringraum (290) ein zweites Durchgangsloch ist, das axial und radial mit dem ersten Durchgangsloch ausgerichtet ist, wodurch ein Rückströmungskanal durch den Körper (210) gebildet wird; und wobei das Einlasskanalloch ein Rückschlagventil bildet, wodurch Strömung durch ein stromabwärts liegendes Ende (330b) des Einsatzes (270) verhindert wird;
die Einlassanschlüsse (320) zwischenliegende gegenüberliegende axiale Enden (330) des Einsatzes (270) sind, der Einsatz einen ersten Einsatzringraum (340), der sich radial nach innen erstreckt und stromabwärts der Einlassanschlüsse (320) liegt, und ein Gleitelement (350), das in dem Einlasskanal (250b) angeordnet ist, beinhaltet, wobei das Gleitelement (350) größer als ein Innendurchmesser des ersten Einlassringraums (340) ist, wodurch das Rückschlagventil gebildet wird;
**dadurch gekennzeichnet, dass** das Ventil (200) einen Kolben (400) beinhaltet und
ein Vorspannelement (360), das den Einsatz (270) stromaufwärts vorspannt, der Auslassringraum (290) einen stromabwärts liegenden Federsitz (370) bildet und der Einsatz (270) einen zweiten Einsatzringraum (380) beinhaltet, der sich radial nach außen erstreckt, wodurch ein stromaufwärts liegender Federsitz gebildet wird;
wobei der Körper (210) einen stromaufwärts liegenden Ringraum (385) beinhaltet, der eine Einlassöffnung (240) beinhaltet, wobei der stromaufwärts liegende Ringraum (385) Bewegung stromaufwärts des Einsatzes (270) durch das stromaufwärts liegende Ende des Körpers (210) verhindert; und
wobei der stromaufwärts liegende Ringraum (385) eine Kolbenöffnung (390) beinhaltet, durch die sich der Kolben (400) für eine Verbindung mit dem zweiten Einsatzringraum (380) und zum stromabwärtigen Vorspannen des Einsatzes (270) erstreckt.

2. Ventil (200) nach Anspruch 1, wobei der Einsatz (270) zur axialen Bewegung durch Gleiten oder Drehen in dem Körper (210) ausgelegt ist.

3. Ventil (200) nach Anspruch 1 oder Anspruch 2, wobei die Vielzahl von Auslasskanälen (250a) Blindlöcher sind und/oder wobei die Vielzahl von Auslasskanälen (250a) wechselseitig unterschiedliche Volumina definieren, wodurch wechselseitig unterschiedliche Strömungsraten durch den Körper (210) bereitgestellt werden.

4. Ventil nach einem vorstehenden Anspruch, wobei der Einsatz eine Vielzahl von Einlassanschlüssen beinhaltet, die für eine strömungstechnische Verbindung mit der entsprechenden Vielzahl von Auslassanschlüssen ausgelegt ist, um unterschiedliche Strömungsraten durch den Körper bereitzustellen.

5. Ventil (200) nach Anspruch 4, wobei jeder der Vielzahl von Einlassanschlüssen (320) eine wechselseitig unterschiedliche Größe aufweist und jeder der Vielzahl von Auslasskanälen (250a) eine selbe Größe aufweist, wodurch die Vielzahl von Einlassanschlüssen (320) eine entsprechende Vielzahl von Strömungsraten durch das Ventil (200) bereitstellt.

6. Ventil (200) nach einem vorstehenden Anspruch, wobei jeder der Vielzahl von Einlassanschlüssen (320) eine selbe Größe aufweist und jeder der Vielzahl von Auslasskanälen (250a) eine wechselseitig unterschiedliche Größe aufweist, wodurch die Vielzahl von Auslasskanälen (250a) eine entsprechende Vielzahl von Strömungsraten durch das Ventil (200) bereitstellt.

7. Ventil nach einem vorstehenden Anspruch wobei das Vorspannelement eine Feder ist.

8. Ventil (200) nach einem vorstehenden Anspruch, wobei das Ventil (200) eine elektronische oder pneumatische Steuereinheit (410) zum Steuern des Kolbens (400) beinhaltet.

9. Ventil (200) nach einem vorstehenden Anspruch, wobei der Körper (210) ein mechanisches Verbindungsstrukturelement zum Befestigen des Körpers (210) in einem Kältemittelsystem (450) beinhaltet.

10. Kältemittelsystem (450), das einen Mikrokanal-Wärmetauscher (460) beinhaltet, der einen Sammler (500) beinhaltet, wobei der Sammler (500) einen Einlass beinhaltet, der Einlass gestaltet ist, mit dem mechanischen Verbindungsstrukturelement des Ventils (200) nach Anspruch 10 mechanisch verbunden zu werden, und/oder wobei das Kältemittelsystem (450) ein Ventil (20) nach einem vorstehenden Anspruch umfasst.

11. Verfahren (700) zum Steuern einer Strömung durch ein Ventil (200) mit einer Steuereinheit (410), wobei das Verfahren (700) Folgendes umfasst:
Bestimmen (S210) einer erforderlichen Strömungsrate durch das Ventil (200); und
Verbinden (S220) eines Kolbens (400), wodurch sich ein Einlasskanal (250b) axial in einer Stromabwärtsrichtung in dem Ventil (200) erstreckt, wobei der Einlasskanal (250b) strömungstechnisch mit einem oder mehreren einer Vielzahl von Auslasskanälen (250a) verbunden ist, um Strömung durch einen oder mehrere Auslasskanäle (250a) in dem Ventil (200) messbar zu erhöhen.

12. Verfahren (700) nach Anspruch 11, wobei das Verfahren (700) weiter Folgendes umfasst:
Bestimmen (S230), der Strömung eines Materials durch das Ventil (200) zu stoppen; und
Trennen (S240) des Kolbens, wobei der Einlasskanal (250b) in einer Stromaufwärtsrichtung in dem Ventil (200) vorgespannt ist; und
wobei der Einlasskanal (250b) strömungstechnisch von dem einen oder den mehreren Auslasskanälen (250a) getrennt wird, um Strömung durch den einen oder die mehreren Auslasskanäle (250a) in dem Ventil (200) messbar zu verringern.

## Revendications

1. Vanne (200), comprenant :
un corps (210) qui présente une extrémité amont (220) et une extrémité aval(230) ;
un orifice d'entrée (240);
une pluralité de passages (250) incluant :
un premier passage de sortie (250a1) s'étendant jusque dans le corps (210) depuis l'extrémité aval (230) vers un emplacement situé entre l'extrémité amont (220) et l'extrémité aval (230) du corps (210) ;
un passage d'entrée (250b) s'étendant jusque dans le corps (210) depuis l'extrémité amont (220) du corps (210), la pluralité de passages (250) s'étendant le long d'axes mutuellement parallèles (255), dans laquelle les axes mutuellement parallèles (255) sont décalés radialement et/ou circonférentiellement les uns des autres ; et
le passage d'entrée (250b) étant au moins partiellement formé par un insert (270) configuré pour se déplacer axialement pour :
venir en prise de manière fluidique avec le premier passage de sortie (250a1) pour définir un passage de fluide continu entre l'extrémité amont (220) et l'extrémité aval (230) du corps, dans laquelle :
un débit d'écoulement de sortie à travers le corps (210) augmente ou diminue selon un emplacement axial de l'insert (270) ;
dans laquelle :
une pluralité de passages de sortie (250a), incluant le premier passage de sortie (250a1), s'étendant jusque dans le corps (210) depuis l'extrémité aval (230) du corps (210) vers un emplacement situé entre l'extrémité amont (220) et l'extrémité aval (230) du corps (210) ;
le passage d'entrée (250b) et la pluralité de passages de sortie (250a) s'étendent le long d'axes mutuellement parallèles (255) et sont décalés circonférentiellement et/ou radialement de manière à être espacés dans le corps (210) ;
le corps (210) inclut un espace annulaire de sortie (290) présentant un passage central (300) dans lequel l'insert (270) se déplace, et la pluralité de passages de sortie (250a) sont formés dans l'espace annulaire de sortie (290) ;
la pluralité de passages de sortie (250a) inclut une pluralité respective d'orifices de sortie (310) pour une connexion fluidique avec le passage d'entrée (250b) ;
le passage d'entrée (250b) dans l'insert (270) est un premier trou traversant, et le passage central (300) dans l'espace annulaire de sortie (290) est un second trou traversant qui est axialement et radialement aligné avec le premier trou traversant, formant ainsi un passage d'écoulement de retour dans le corps (210) ; et dans laquelle le trou de passage d'entrée forme un clapet antiretour, empêchant ainsi un écoulement à travers une extrémité aval (330b) de l'insert (270) ;
les orifices d'entrée (320) sont des extrémités axiales opposées intermédiaires (330) de l'insert (270), l'insert inclut un premier espace annulaire d'insert (340) qui s'étend radialement vers l'intérieur et se trouve en aval des orifices d'entrée (320), et un élément coulissant (350) disposé dans le passage d'entrée (250b), l'élément coulissant (350) étant plus grand qu'un diamètre intérieur du premier espace annulaire d'entrée (340), formant ainsi le clapet antiretour ;
**caractérisée en ce que** la vanne (200) inclut un piston (400), et
un élément de sollicitation (360) qui, en amont, sollicite l'insert (270), l'espace annulaire de sortie (290) forme un siège de ressort aval (370), et l'insert (270) inclut un second espace annulaire d'insert (380) qui s'étend radialement vers l'extérieur, formant ainsi un siège de ressort amont ;
dans laquelle le corps (210) inclut un espace annulaire amont (385) qui inclut un orifice d'entrée (240), l'espace annulaire amont (385) empêchant un déplacement en amont de l'insert (270) à travers l'extrémité amont du corps (210) ; et
dans laquelle l'espace annulaire amont (385) inclut un orifice de piston (390) par lequel le piston (400) s'étend pour venir en prise avec le second espace annulaire d'insert (380) et en aval solliciter l'insert (270).

2. Vanne (200) selon la revendication 1, dans laquelle l'insert (270) est configuré pour se déplacer axialement par glissement ou rotation dans le corps (210).

3. Vanne (200) selon la revendication 1 ou la revendication 2, dans laquelle la pluralité de passages de sortie (250a) sont des trous aveugles et/ou dans laquelle la pluralité de passages de sortie (250a) définit des volumes mutuellement différents, fournissant ainsi des débits d'écoulement mutuellement différents à travers le corps (210).

4. Vanne selon une quelconque revendication précédente, dans laquelle l'insert inclut une pluralité d'orifices d'entrée configurés pour se connecter librement avec la pluralité respective d'orifices de sortie afin de fournir des débits d'écoulement différentiels à travers le corps.

5. Vanne (200) selon la revendication 4, dans laquelle chacune de la pluralité d'orifices d'entrée (320) présente une taille mutuellement différente et chacun de la pluralité de passages de sortie (250a) présente une taille identique, selon laquelle la pluralité d'orifices d'entrée (320) fournit une pluralité respective de débits d'écoulement à travers la vanne (200).

6. Vanne (200) selon une quelconque revendication précédente, dans laquelle chacun de la pluralité d'orifices d'entrée (320) présente une taille identique et chacune de la pluralité de passages de sortie (250a) présente une taille mutuellement différente, selon laquelle la pluralité de passages de sortie (250a) fournit une pluralité respective de débits d'écoulement à travers la vanne (200).

7. Vanne selon une quelconque revendication précédente, dans laquelle l'élément de sollicitation est un ressort.

8. Vanne (200) selon une quelconque revendication précédente, dans laquelle la vanne (200) inclut un dispositif de commande électronique ou pneumatique (410) pour commander le piston (400).

9. Vanne (200) selon une quelconque revendication précédente, dans laquelle le corps (210) inclut une caractéristique de connexion mécanique pour fixer le corps (210) dans un système de réfrigérant (450).

10. Système de réfrigération (450) incluant un échangeur de chaleur à microcanaux (460), qui inclut un collecteur (500), le collecteur (500) incluant une entrée, l'entrée configurée pour se connecter mécaniquement avec la caractéristique de connexion mécanique de la vanne (200) selon la revendication 10 et/ou dans lequel le système de réfrigération (450) comprend une vanne (20) telle que revendiquée dans une quelconque revendication précédente.

11. Procédé (700) pour commander un débit à travers une vanne (200) à l'aide d'un dispositif de commande (410), le procédé (700) comprenant les étapes consistant à :
déterminer (S210) un débit d'écoulement souhaité à travers la vanne (200) ; et
mettre en prise (S220) un piston (400), étendant ainsi axialement un passage d'entrée (250b) dans une direction aval à l'intérieur de la vanne (200), selon lequel le passage d'entrée (250b) se connecte de manière fluidique à un ou plusieurs d'une pluralité de passages de sortie (250a) pour augmenter sensiblement un écoulement à travers un ou plusieurs passages de sortie (250a) à l'intérieur de la vanne (200).

12. Procédé (700) selon la revendication 11, le procédé (700) comprenant en outre les étapes consistant à :
déterminer (S230) d'arrêter l'écoulement d'un matériau à travers la vanne (200) ; et
libérer (S240) le piston, selon lequel le passage d'entrée (250b) est sollicité dans une direction amont à l'intérieur de la vanne (200) ; et
selon lequel le passage d'entrée (250b) se déconnecte de manière fluidique d'avec les un ou plusieurs passages de sortie (250a) pour diminuer de façon mesurable un écoulement à travers les un ou plusieurs passages de sortie (250a) dans la vanne (200).
